# FASCICULE DE BREVET EUROPEEN

(11) **EP 0 553 581 B1**
(45) Date de publication et mention de la délivrance du brevet: **29.04.1998**
(21) Numéro de dépôt: 92403439.0
(22) Date de dépôt: 17.12.1992
(51) Int. Cl.: C08L 77/06, C08L 77/00

(54) **Compositions amorphes transparentes à tenue aux agents chimiques élévée**
Transparente amorphe Zusammensetzungen mit erhöhtem Gehalt an chemischen Stoffen
Transparent amorphous compositions with improved resistance to chemical agents

(30) Priorité: 31.12.1991 FR 9116402
(43) Date de publication de la demande: 04.08.1993
(73) Titulaire: ELF ATOCHEM S.A., 92800 Puteaux, Hauts-de-Seine (FR)
(72) Inventeur: Maj, Philippe, W-5340 Bad Honnef (DE); Blondel, Philippe, F-27300 Bernay (FR)
(74) Mandataire: Luziau, Nelly

(56) Documents cités:
- EP-A- 0 347 348
- EP-A- 0 409 666
- DE-A- 2 344 334
- PATENT ABSTRACTS OF JAPAN vol. 11, no. 394 (C-465)(2841) 23 Décembre 1987

## Description

La présente invention a pour objet de nouvelles compositions amorphes transparentes et, plus particulièrement, des compositions amorphes transparentes présentant une tenue aux agents chimiques (solvants) élevée, ainsi que les objets fabriqués à partir de celles-ci.

EP-A-0 313 436 (au nom de la demanderesse) ainsi que FR-A-2 575 756 et FR-A-2 606 416 (EMS) décrivent et revendiquent des polyamides amorphes transparents constitués de motifs aliphatiques à plus de 7 carbones, de diamine cycloaliphatique et d'acide térephtalique et/ou isophtalique. Ces polyamides amorphes présentent une tenue aux agents chimiques (solvants) qui est fonction de la proportion en poids de motif aliphatique dans le polyamide amorphe. Afin d'apprécier la tenue aux agents chimiques (solvants), on utilise souvent comme paramètre l'absorption d'éthanol. Ainsi, dans les cas précités, lorsque l'on porte l'absorption d'éthanol en fonction de la proportion en poids de motif aliphatique, la courbe ainsi obtenue présente un profil de cloche. Pour des pourcentages faibles, l'absorption est faible, donc la tenue aux solvants est bonne, et pour des pourcentages élevés, les résultats sont identiques. Par contre, pour des pourcentages intermédiaires, l'absorption est élevée, donc la tenue aux agents chimiques (solvants) est faible.

Pour des proportions pondérales en motifs aliphatiques faibles, le polyamide contient de grandes proportions de diacide aromatique et de diamine cycloaliphatique, qui sont des composés d'un coût élevé et, par là, ce polyamide lui-même est cher. Pour des proportions pondérales en motifs aliphatiques élevées, le polyamide est certes d'un coût modéré mais présente l'inconvénient de propriétés thermiques et mécaniques faibles. Ainsi, l'homme de l'art recherchant un polyamide amorphe transparent ayant une tenue aux agents chimiques (solvants) élevée n'est pas tenté d'utiliser des polyamides à pourcentage en motifs aliphatique intermédiaires puisque ceux-ci ne sont pas appropriés, et doit donc soit choisir des polyamides à proportion en motif aliphatique faible, c'est-à-dire d'un coût élevé, soit des polyamides à proportion en motif aliphatique élevée, c'est-à-dire avec des propriétés mécaniques et thermiques faibles.

De façon surprenante, la demanderesse a trouvé que ces inconvénients sont obviés grâce à la présente invention.

Ainsi, la présente invention fournit une composition amorphe transparente à tenue aux agents chimiques élevée comprenant, en poids:
a) 1 à 99% d'un premier polyamide caractérisé par les enchaînements: 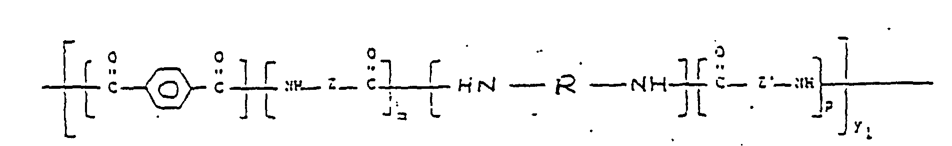 et 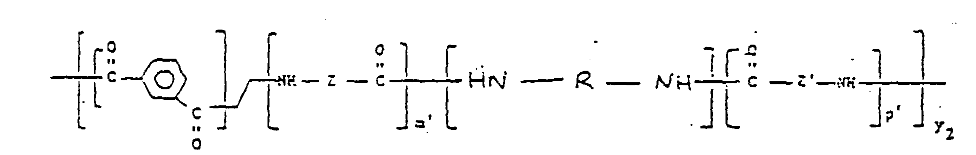 dans lesquels:
   y₁ et y₂ sont des nombres dont la somme y₁ + y₂ est comprise entre 10 et 200;
   m, p, m', p' sont des nombres égaux ou supérieurs à 0;
   Z et Z', dans les motifs aliphatiques -NH-Z-CO- et -NH-Z'-CO-, identiques ou différents sont soit un segment polyméthylène (̵CH₂)̵ₙoù n est un nombre entier égal ou supérieur à 6 et de préférence compris entre 7 et 11, soit une séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
   -HN-R-NH- représente une amine cycloaliphatique et/ou aliphatique et/ou arylaliphatique;
   le diacide aromatique pouvant être remplacé, à raison d'au plus 30% en mole, par un diacide carboxylique aliphatique contenant plus de 4, de préférence 6, atomes de carbone entre les fonctions acides,
   lesdits enchaînements étant présents en des proportions telles que les motifs aliphatiques -NH-Z-CO- et -NH-Z'-CO- représentent moins de 55% en poids dudit premier polyamide; et
b) 99 à 1% d'un second polyamide caractérisé par les enchaînements: 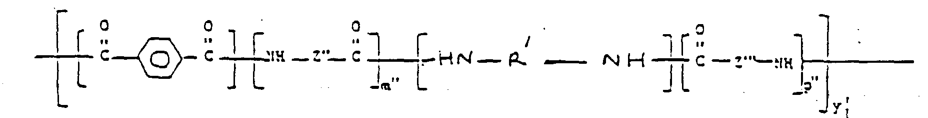 et 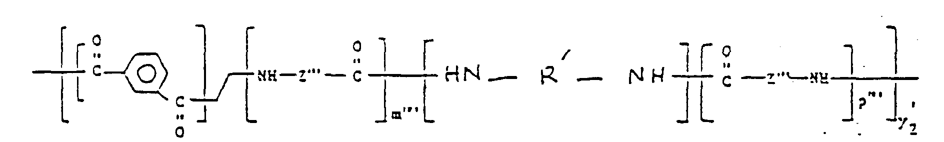 dans lesquels:
   y'₁ et y'₂ sont des nombres dont la somme y'₁ + y'₂ est comprise entre 10 et 200;
   m'', p'', m''', p''' sont des nombres égaux ou supérieurs à 0;
   Z'' et Z''', dans les motifs aliphatiques -NH-Z''-CO- et -NH-Z'''-CO-, identiques ou différents sont soit un segment polyméthylène (̵CH₂)̵ₙ, où n' est un nombre entier égal ou supérieur à 6 et de préférence compris entre 7 et 11, soit une séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
   -HN-R'-NH- représente une amine cycloaliphatique et/ou aliphatique et/ou arylaliphatique;
   le diacide aromatique pouvant être remplacé, à raison d'au plus 30% en mole, par un diacide carboxylique aliphatique contenant plus de 4, de préférence 6, atomes de carbone entre les fonctions acides,
   lesdits enchaînements étant présents en des proportions telles que les motifs aliphatiques -NH-Z-CO- et -NH-Z'-CO- représentent plus de 55% en poids dudit second polyamide.

Les motifs aliphatiques -NH-Z(Z'')-CO- et -NH-Z'(Z''')-CO- sont obtenus, lors de la synthèse, à partir de lactame, d'aminoacide correspondant, ou d'une condensation sensiblement stoechiométrique d'une ou plusieurs diamine(s) aliphatique(s) et d'un ou plusieurs diacide(s) carboxylique(s) aliphatique(s). Les lactames contiennent au moins 7 atomes de carbone, de préférence 8 à 12. Les lactames préférés sont le capryllactame ou lactame 8, le dodécalactame, l'undécanolactame, le lauryllactame, ou lactame 12, ci-après désigné L12. Particulièrement préféré est le L12 conduisant au motif 12.
L'aminoacide correspondant est l'ω-aminoacide contenant autant d'atomes de carbone que le lactame correspondant. Les ω-aminoacides contiennent au moins 7 atomes de carbone, de préférence 8 à 12. Les ω-aminoacides préférés sont l'acide 10-aminodécanoïque, l'acide 11-amino-undécanoïque, l'acide 12-aminododécanoïque.
Le diacide carboxylique aliphatique est un α,ω-diacide carboxylique possédant au moins 4 atomes de carbone (non compris les atomes de carbone du groupe carboxylique), de préférence au moins 6, dans la chaîne carbonée linéaire ou ramifiée. Les diacides carboxyliques préférés sont l'acide adipique, l'acide azélaïque, l'acide sébacique et l'acide 1,12-dodécanoïque.

Le terme "diamine aliphatique" tel qu'utilisé dans la présente invention désigne une α,ω-diamine contenant entre les groupes amino terminaux au moins 4 atomes de carbone, de préférence 6 à 12. La chaîne carbonée est linéaire (polyméthylènediamine) ou ramifiée. Des mélanges de diamines aliphatiques sont aussi envisagés dans la présente invention. Des diamines aliphatiques préférées sont l'hexaméthylènediamine (HMDA), la 2,2,4- et/ou 2,4,4-triméthylhexaméthylènediamine, la dodécaméthylènediamine, la triméthylhexaméthylènediamine, la méthylpentaméthylènediamine, la 5-méthylnonaméthylènediamine et la décaméthylènediamine.

Le terme "diamine cycloaliphatique" tel qu'utilisé dans la présente invention désigne une amine de formule: 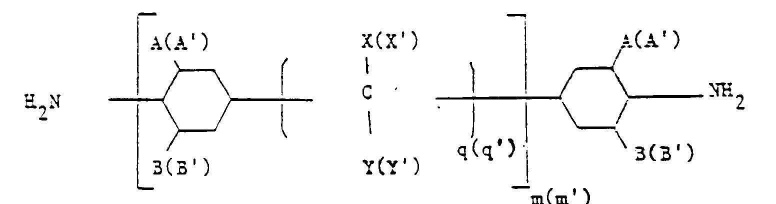 dans laquelle:
A(A') et B(B'), identiques ou différentes, représentent l'hydrogène, le radical méthyle, le radical éthyle ou le radical isopropyle;
X(X') et Y(Y'), identiques ou différents, représentent l'hydrogène ou le radical méthyle;
q(q')est un nombre entier compris entre 0 et 6;
m(m')vaut 0 ou 1.
Des mélanges de diamines cycloaliphatiques sont aussi envisagés dans la présente invention.
Le terme "diamine cycloaliphatique" couvre aussi, au sens de la présente invention, les diamines comportant une structure cycloaliphatique telle que définie par la formule ci-dessus dans leur chaîne carbonée. On peut citer à titre d'exemple l'isophoronediamine et le 3,6-diaminométhyltricyclodécane. Des exemples de diamines cycloaliphatiques sont, à titre non limitatif: isophoronediamine, le bis(4-aminocyclohexyl)méthane (BACM), le bis(3-méthyl-4-aminocyclohexyl)méthane (BACM), le bis(3-méthyl-4-amino-5-éthylcyclohexyl)méthane, le 1,2-bis(4-aminocyclohexyl)éthane, le 2,2'-bis(4-aminocyclohexyl)propane et le 2,2'-bis(3-méthyl-4-aminocyclohexyl)propane.

Le terme "diamine(s) arylaliphatique(s)" tel qu'utilisé dans la présente invention désigne les amines de formule:

H₂N-R₁-Ar-R₂-NH₂

dans laquelle:
- R₁ et R₂,: identiques ou différents, sont des résidus hydrocarbonés en C₁ à C₆, linéaires ou ramifiés;
- Ar: est un radical aromatique divalent qui désigne un cycle aromatique ou deux ou plusieurs cycles aromatiques liées par un groupe alkyle, ledit radical Ar pouvant par ailleurs être substitué selon toute configuration, ortho, méta, para.
Des mélanges de diamines arylaliphatiques sont aussi envisagés dans la présente invention. A titre d'exemple, on peut citer la méta-xylylènediamine (pour laquelle Ar = m-phényle, R₁ = R₂ = -CH₂-).

Les dérivés saturés ou ceux comportant une structure aromatique-aliphatique dans leur chaine carbonée sont aussi envisagées dans la présente invention. A titre d'exemple, on peut citer le 1,3-bisaminométhylcyclohexane et le 1,3-diaminométhylnorbornane.
Des mélanges de diamine(s) aliphatique(s) et/ou cycloaliphatique(s) et/ou arylaliphatique(s), notamment d'isomères, sont aussi envisagés dans la présente invention.
Le terme "sensiblement stoechiométrique" signifie un rapport en mole diamine/diacide compris entre 1,1/1 et 1/1,1.
Ainsi, le terme "condensation sensiblement stoechiométrique d'une ou plusieurs diamine(s) et d'un ou plusieurs diacide (s)" peut représenter le motif 6,6 ou 6,12 par exemple. Le terme "polyamide amorphe", tel qu'utilisé dans la présente invention, désigne un polyamide dont de fusion mesurée par DSC à 20°C/mn après refroidissement à 40°C/mn est inférieure à 3 cal/g.
Le terme "polyamide transparent", tel qu'utilisé dans la présente invention, désigne un polyamide dont le facteur de transmission, lorsque ce polyamide est sous forme d'une plaque mince de 2 mm d'épaisseur, est d'au moins 70%.

Selon un mode de réalisation préféré de la présente invention, dans ledit premier polyamide, les motifs aliphatiques représentent moins de 45% en poids dudit premier polyamide, avantageusement moins de 40%.

Selon un autre mode de réalisation préféré de la présente invention, dans ledit second polyamide, les motifs aliphatiques représentent plus de 60% en poids dudit second polyamide, avantageusement plus de 70%.

Préférentiellement, la composition comprend en poids:
a) 5 à 95% dudit premier polyamide; et
b) 95 à 5% dudit second polyamide.

Avantageusement, la composition comprend en poids:
a) 20 à 80% dudit premier polyamide; et
b) 80 à 20% dudit second polyamide.

Selon un mode de réalisation préféré de la présente invention, les motifs aliphatiques desdits premier et second polyamides sont choisis dans le groupe consistant en les motifs issus du capryllactame, du lauryllactame, de l'acide 12-aminododécanoïque, de l'acide 11-amino-undécanoïque, de l'acide 10-aminododécanoïque, et leurs mélanges. Avantageusement, le motif aliphatique desdits premier et second polyamides est le motif 12 issu du lauryllactame.

Selon un autre mode de réalisation préféré de la présente invention, la diamine desdits premier et second polyamides est une diamine cycloaliphatique. Avantageusement, ladite diamine a pour formule: 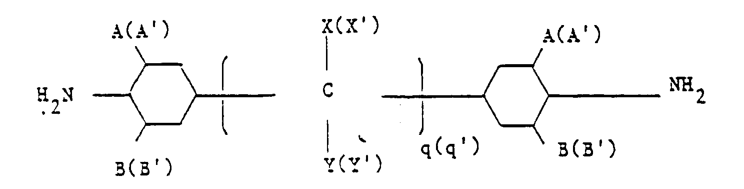 dans laquelle:
A (A') et B (B'), identiques ou différents, représentent l'atome d'hydrogène ou le radical méthyle;
X (X') et Y (Y'), identiques ou différents, représentent l'atome d'hydrogène ou le radical méthyle; et
q (q') est un nombre entier compris entre 1 et 3;
éventuellement remplacée jusqu'à 50% en mole par l'isophoronediamine.
Préférentiellement, la diamine cycloaliphatique desdits premier et second polyamides est le bis-(3-méthyl-4-aminocyclohexyl)méthane ou le bis-(4-aminocyclohexyl)méthane, éventuellement remplacée jusqu'à 50% en mole par l'isophoronediamine.

Un autre mode de réalisation de la présente invention consiste en une composition dans laquelle, dans le(s)dit(s) premier et/ou second polyamide(s), le rapport y₁/y₁+y₂ et/ou le rapport y'₁/y'₁+y'₂ est(sont) supérieur(s) à 0,5.

Les polyamides peuvent être synthétisés par n'importe quel procédé approprié connu dans l'art. De préférence, ils sont préparés selon le procédé tel que décrit et revendiqué dans EP-0 313 436, au nom de la demanderesse.

Les compositions selon la présente invention peuvent être préparées par n'importe quel procédé de mélange connu de l'homme de l'art, pourvu que le mélange soit effectué à une température suffisante pour que les polyamides soient à l'état fondu.

Un procédé préféré est le compoundage, qui consiste à charger les polyamides sous forme de granulés dans une extrudeuse classique, à une température supérieure à la température de transition vitreuse Tg, avantageusement entre 250°C et 400°C.

Un autre procédé consiste à mélanger lesdits premier et second polyamides, dont l'un au moins est à l'état de prépolymère dont le degré de polymérisation est d'au moins 50%, en présence d'un catalyseur d'amidification ou de transamidification, tel que l'acide phosphorique ou hypophosphoreux.

Les compositions selon la présente invention sont amorphes et transparentes, avec une tenue aux agents chimiques (solvants) élevée ainsi que de bonnes propriétés mécaniques et thermiques, alors que le polyamide présentant la même proportion de motif aliphatique mais obtenu directement par synthèse a une tenue aux solvants médiocre.

D'autres composants peuvent être ajoutés à la présente composition, tels que les additifs ou un autre polyamide. Ce dernier polyamide peut être un polyamide amorphe tel que décrit ci-avant.
Les additifs classiques comprennent, par exemple, les stabilisants à la lumière et/ou la chaleur, colorants, azurants optiques, plastifiants, agents de démoulage, agents d'ignifugation et autres.

La présente invention a donc aussi pour objet une composition comprenant de plus une charge et/ou un additif classique.

La présente invention a aussi pour objet les objets obtenus à partir de la présente composition amorphe transparente. Ces objets peuvent être fabriqués par tout procédé classique tel que l'extrusion, le moulage-injection et autre.

Dans les exemples qui suivent, le module de flexion est déterminé suivant la norme ASTM D 790 après conditionnement. L'absorption à l'éthanol est mesurée sur des éprouvettes type IFC Institut Français du Caoutchouc d'épaisseur 2 mm et de poids environ 1 g, préalablement séchées, après 8 jours d'immersion dans l'éthanol pur à 25°C. La valeur est donnée en pourcentage d'augmentation du poids.

### EXEMPLES 1 A 3

Les exemples 1 à 3 sont réalisés par compoundage à l'état fondu à l'aide d'une extruseuse bivis Haacke de laboratoire à partir de mélanges de granulés de polyamides transparents synthétisés à l'état fondu. Les polyamides transparents sont synthétisés à partir de: lauryllactame (L12), acides térephtalique (TA) et isophtalique (IA) et bis-(3-méthyl-4-aminocyclohexyl)méthane (BMACM). Les polyamides A et B et leurs proportions respectives en poids sont tels que la proportion en poids de motif aliphatique dans le mélange final est identique pour les quatre exemples.

### EXEMPLE 4 (comparatif)

Cet exemple comparatif est le polyamide obtenu par synthèse directe, ayant la même proportion en poids de motif aliphatique que dans les exemples 1 à 3.

Dans le tableau 1 sont portés, pour les exemples 1 à 4, les compositions molaires, le pourcentage en poids de motif aliphatique -c'est-à-dire L12-, les fractions massiques des polyamides dans le mélange, les conditions de compoundage -température et vitesse- et les propriétés des polyamides (absorption d'EtOH, module de flexion).

**TABLEAU 1**

| PA (A) | | | | PA (B) | | | | | | |
|---|---|---|---|---|---|---|---|---|---|---|
| Ex. | L12/TA/IA/ BMACM | Poids % L12 | Abs. EtoH (%) | L12/TA/IA/ BMACM | Poids % L12 | Abs. EtOH (%) | % de B dans le mélange | Température (°C)/vi tesse (tr/mn) | Module MPa | Abs. EtOH(%) |
| 1 | 1/0,7/0,3/1 | 33,0 | 44 | 8/1/0/1 | 79,8 | 16,6 | 30,8 | 280/60 | 1680 | 29 |
| 2 | 1/0,7/0,3/1 | 33,0 | 44 | 7/1/0/1 | 77,5 | 17 | 32,2 | 280/60 | 1640 | 29 |
| 3 | 1/0,7/0,3/1 | 33,0 | 44 | 3,8/1/0/1 | 65,2 | 26,3 | 44,2 | 280/60 | 1640 | 33 |
| 4 | - | - | - | 1,9/1/0/1 | 48,3 | 53 | 100 | 280/60 | 1610 | 53 |

### EXEMPLES 5 A 11 ET 12 (comparatif)

Les exemples ont été réalisés suivant le mode opératoire de l'exemple 1. Les résultats sont consignés dans le tableau 2.

L'exemple 12 est l'exemple comparatif dont la proportion en poids de motif aliphatique est égale à celle des exemples 5 à 11.

**TABLEAU 2**

| | PA (A) | | | PA (B) | | | | | | |
|---|---|---|---|---|---|---|---|---|---|---|
| Ex. | L12/TA/IA/ BMACM | Poids % L12 | Abs. EtOH (%) | L12/TA/IA/ BMACM | Poids % L12 | Abs. EtOH (%) | % de B dans le mélange | Température (°C/vitesse (tr/mn) | Module MPa | Abs. EtOH (%) |
| 5 | 1/0,7/0,3/1 | 33,0 | 44 | 30/1/0/1 | 93,7 | | 36 | 320/60 | 1720 | 24 |
| 6 | 1/0,7/0,3/1 | 33,0 | 44 | 20/1/0/1 | 90,8 | | 37,8 | 320/60 | 1690 | 24,4 |
| 7 | 1/0,7/0,3/1 | 33,0 | 44 | 13/1/0/1 | 86,5 | | 40,6 | 320/60 | 1660 | 24,9 |
| 8 | 1/0,7/0,3/1 | 33,0 | 44 | 10/1/0/1 | 83,1 | | 43,3 | 320/60 | 1650 | 25,7 |
| 9 | 1/0,7/0,3/1 | 33,0 | 44 | 8/1/0/1 | 79,8 | | 46,2 | 280/60 | 1580 | 26,1 |
| 10 | 1/0,7/0,3/1 | 33,0 | 44 | 7/1/0/1 | 77,5 | | 48,5 | 280/60 | 1610 | 27,3 |
| 11 | 1/0,7/0,3/1 | 33,0 | 44 | 3,8/1/0/1 | 65,2 | | 66,4 | 280/60 | 1550 | 30 |
| 12 | - | - | - | 2,4/1/0/1 | 54,2 | | - | - | 1550 | 43 |

### EXEMPLES 13 A 19

Dans ces exemples similaires aux exemples 1 à 3, le polymère à proportion en motif aliphatique faible est synthétisé à partir de L12, TA, IA, BMACM, tandis que le polymère à proportion en motif aliphatique élevé est synthétisé à partir de L12, TA, IA, bis-(4-aminocyclohexyl)méthane (BACM).

Les compositions, conditions opératoires et propriétés des polymères transparents obtenus par compoundage sont données dans le tableau 3.

**TABLEAU 3**

| | PA (A) | | | PA (B) | | | | | | |
|---|---|---|---|---|---|---|---|---|---|---|
| Ex | L12/TA/IA/ BMACM | Poids % L12 | Abs. EtOH (%) | L12/TA/IA/ BACM | Poids % L12 | Abs. EtOH (%) | % de B dans le mélange | Température (°C)/vitesse (tr/mn) | Module MPa | Abs. EtOH (%) |
| 13 | 1/0,7/0,3/1 | 33,0 | 44 | 7/1/0/1 | 34,6 | 17 | 10 | 280/60 | 1850 | 37,6 |
| 14 | 1/0,7/0,3/1 | 33,0 | 44 | 7/1/0/1 | 34,6 | 17 | 30 | 280/60 | 1730 | 30 |
| 15 | 1/0,7/0,3/1 | 33,0 | 44 | 7/1/0/1 | 34,6 | 17 | 50 | 280/60 | 1600 | 23,7 |
| 16 | 1/0,7/0,3/1 | 33,0 | 44 | 7/1/0/1 | 34,6 | 17 | 70 | 280/60 | 1450 | 20 |
| 17 | 1/0,7/0,3/1 | 33,0 | 44 | 7/1/0/1 | 34,6 | 17 | 90 | 280/60 | 1305 | 17,8 |
| 18 | 1/0,85/0,25/1 | 32,1 | 39,2 | 7/1/0/1 | 34,6 | 17 | 45 | 280/60 | 1607 | 24,5 |
| 19 | 1/0,8/0,2/1 | 33,0 | 40,6 | 7/1/0/1 | 34,6 | 17 | 45 | 280/60 | - | 28,9 |

### EXEMPLES 20 ET 21

Ces exemples sont mis en oeuvre selon le même mode opératoire que l'exemple 1. Les résultats sont consignés dans le tableau 4.

### EXEMPLES 22 A 24

Ces exemples sont mis en oeuvre selon le même mode opératoire que l'exemple 1. Dans ces exemples, le diacide est l'acide isophtalique exclusivement. Les résultats sont consignés dans le tableau 4.

### EXEMPLE 25 (comparatif)

Le polyamide selon l'exemple 25 est obtenu par synthèse directe et présente en poids la même composition que celle de l'exemple 24. Les résultats sont consignés dans le tableau 4.

**TABLEAU 4**

| | PA (A) | | PA (B) | | | | |
|---|---|---|---|---|---|---|---|
| Ex. | L12/TA/IA/BMACM | Poids % L12 | L12/TA/IA/BMACM | Poids % L12 | % de B dans le mélange | Température (°C)/vitesse (tr/mn) | Abs. EtOH (%) |
| 20 | 0,8/0,6/0,4/1 | 28,3 | 7/1/0/1 | 77,5 | 40 | 280/60 | 28,7 |
| 21 | 0,8/0,6/0,4/1 | 28,3 | 7/1/0/1 | 77,5 | 50 | 280/60 | 26,1 |
| 22 | 1/0/1/1 | 33,0 | - | - | 0 | - | dissous (>50) |
| 23 | - | - | 7/0/1/1 | 77,5 | 100 | - | 19 |
| 24 | 1/0/1/1 | 33,0 | 7/0/1/1 | 77,5 | 48,5 | 310/130 | 29 |
| 25 | 2,4/0/1/1 | 54,2 | - | - | - | - | dissous (>50) |

## Revendications

1. Composition amorphe transparente à tenue aux agents chimiques élevée comprenant, en poids:
a) 1 à 99% d'un premier polyamide caractérisé par les enchaînements: 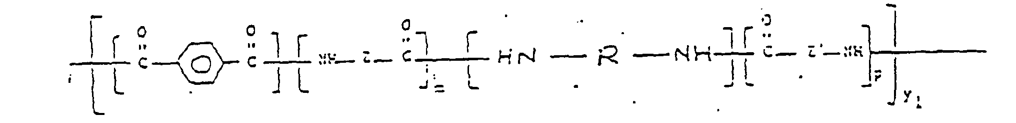 et 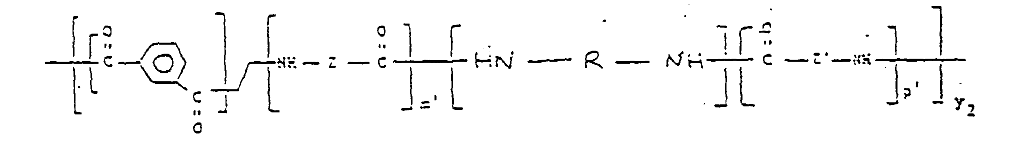 dans lesquels:
y₁ et y₂ sont des nombres dont la somme y₁ + y₂ est comprise entre 10 et 200;
m, p, m', p' sont des nombres égaux ou supérieurs à 0;
Z et Z', dans les motifs aliphatiques -NH-Z-CO- et -NH-Z'-CO-, identiques ou différents sont soit un segment polyméthylène (̵CH₂)̵ₙ où n est un nombre entier égal ou supérieur à 6 et de préférence compris entre 7 et 11, soit une séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
-HN-R-NH- représente une amine cycloaliphatique et/ou aliphatique et/ou arylaliphatique; le diacide aromatique pouvant être remplacé, à raison d'au plus 30% en mole, par un diacide carboxylique aliphatique contenant plus de 4, de préférence 6, atomes de carbone entre les fonctions acides,
lesdits enchaînements étant présents en des proportions telles que les motifs aliphatiques -NH-Z-CO- et -NH-Z'-CO- représentent moins de 55% en poids dudit premier polyamide; et
b) 99 à 1% d'un second polyamide caractérisé par les enchaînements: 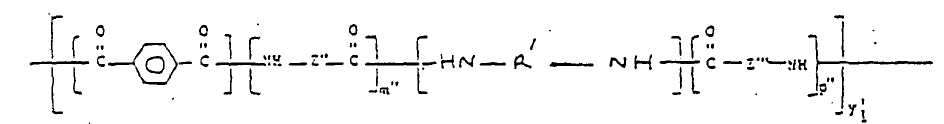 et 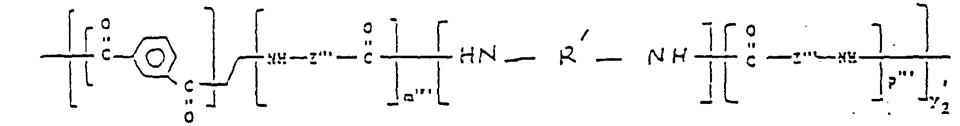 dans lesquels:
y'₁ et y'₂ sont des nombres dont la somme y'₁ + y'₂ est comprise entre 10 et 200;
m", p'', m''', p''' sont des nombres égaux ou supérieurs à 0;
Z'' et Z'", dans les motifs aliphatiques -NH-Z"-CO- et -NH-Z'''-CO-, identiques ou différents sont soit un segment polyméthylène (̵CH₂)̵ₙ,où n' est un nombre entier égal ou supérieur à 6 et de préférence compris entre 7 et 11, soit une séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
-HN-R'-NH- représente une amine cycloaliphatique et/ou aliphatique et/ou arylaliphatique; le diacide aromatique pouvant être remplacé, à raison d'au plus 30% en mole, par un diacide carboxylique aliphatique contenant plus de 4, de préférence 6, atomes de carbone entre les fonctions acides,
lesdits enchaînements étant présents en des proportions telles que les motifs aliphatiques -NH-Z-CO- et -NH-Z'-CO- représentent plus de 55% en poids dudit second polyamide.

2. Composition selon la revendication 1, caractérisée en ce que, dans ledit premier polyamide, les motifs aliphatiques représentent moins de 45% en poids dudit premier polyamide.

3. Composition selon la revendication 2, caractérisée en ce que, dans ledit premier polyamide, les motifs aliphatiques représentent moins de 40% en poids dudit premier polyamide.

4. Composition selon l'une quelconque des revendications 1 à 3, caractérisée en ce que, dans ledit second polyamide, les motifs aliphatiques représentent plus de 60% en poids dudit second polyamide.

5. Composition selon la revendication 4, caractérisée en ce que, dans ledit second polyamide, les motifs aliphatiques représentent plus de 70% en poids dudit second polyamide.

6. Composition selon l'une quelconque des revendications 1 à 5, comprenant, en poids:
a) 5 à 95% dudit premier polyamide; et
b) 95 à 5% dudit second polyamide.

7. Composition selon la revendication 6, comprenant, en poids:
a) 20 à 80% dudit premier polyamide; et
b) 80 à 20% dudit second polyamide.

8. Composition selon l'une quelconque des revendications 1 à 7, caractérisée en ce que les motifs aliphatiques desdits premier et second polyamides sont choisis dans le groupe consistant en les motifs issus du capryllactame, du lauryllactame, de l'acide 12-aminododécanoïque, de l'acide 11-amino-undécanoïque, de l'acide 10-aminododécanoïque, et leurs mélanges.

9. Composition selon l'une quelconque des revendications 1 à 8, caractérisée en ce que le motif aliphatique desdits premier et second polyamides est le motif 12 issu du lauryllactame.

10. Composition selon l'une quelconque des revendications 1 à 9, caractérisée en ce que la diamine desdits premier et second polyamides est une diamine cycloaliphatique.

11. Composition selon la revendication 10, caractérisée en ce que ladite diamine cycloaliphatique desdits premier et second polyamides a pour formule: 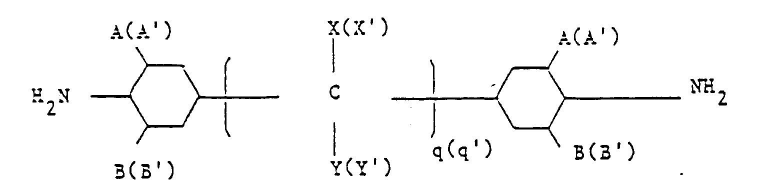 dans laquelle:
A (A') et B (B'), identiques ou différents, représentent l'atome d'hydrogène ou le radical méthyle;
X (X') et Y (Y'), identiques ou différents, représentent l'atome d'hydrogène ou le radical méthyle; et
q (q') est un nombre entier compris entre 1 et 3; éventuellement remplacée jusqu'à 50% en mole par l'isophoronediamine.

12. Composition selon la revendication 11, caractérisée en ce que la diamine cycloaliphatique desdits premier et second polyamides est le bis-(3-méthyl-4-aminocyclohexyl)méthane ou le bis-(4-aminocyclohexyl)méthane, éventuellement remplacée jusqu'à 50% en mole par l'isophoronediamine.

13. Composition selon l'une quelconque des revendications 1 à 12, caractérisée en ce que, dans le(s)dit(s) premier et/ou second polyamide(s), le rapport y₁/y₁+y₂ et/ou le rapport y'₁/y'₁+y'₂ est(sont) supérieur(s) à 0,5.

14. Composition selon l'une quelconque des revendications 1 à 13, caractérisée en ce qu'elle comprend de plus une charge et/ou un additif classique.

15. Objets obtenus à partir d'une composition selon l'une quelconque des revendications 1 à 14.

## Patentansprüche

1. Transparente, amorphe Zusammensetzung mit hoher Widerstandsfähigkeit gegenüber chemischen Reagenzien, enthaltend, bezogen auf das Gewicht:
a) 1 bis 99 % eines ersten Polyamids, gekennzeichnet durch die folgenden Ketten: 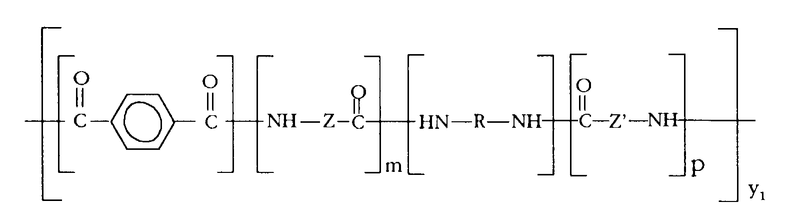 und 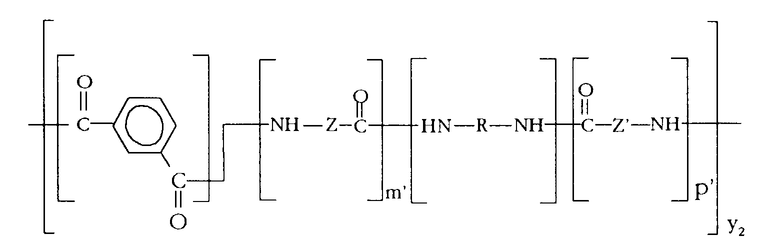 wobei:
- y₁ und y₂ Zahlen sind, deren Summe y₁ + y₂ zwischen 10 und 200 liegt;
- m, p, m', p' Zahlen größer oder gleich 0 sind;
- Z und Z' in den aliphatischen Einheiten -NH-Z-CO- und -NH-Z'-CO-, identisch oder verschieden, entweder ein Polymethylensegment (-CH₂-)ₙ sind, wobei n eine ganze Zahl größer oder gleich 6, vorzugsweise zwischen 7 und 11, ist, oder einen Block darstellen, der eine Amidfunktion enthält, die aus der in etwa stöchiometrischen Kondensation eines oder mehrerer aliphatischer Diamine, die mindestens 4 Kohlenstoffatome zwischen den Aminfunktionen enthalten, und einem oder mehreren aliphatischen Carbonsäuren, die mindestens 4 Kohlenstoffatome, vorzugsweise 6 Kolllenstoffatome, zwischen den Säurefunktionen enthalten, resultiert;
- -HN-R-NH- ein arylaliphatisches und/oder aliphatisches und/oder cycloaliphatisches Amin darstellt;
wobei die aromatische Disäure in Mengen von höchstens 30 Mol-% durch eine aliphatische Carbondisäure ersetzt werden kann, die mehr als 4 Kohlenstoffatome, vorzugsweise mehr als 6 Kohlenstoffatome, zwischen den Säurefunktionen enthält,
wobei die Ketten in solchen Mengen vorhanden sind, daß die aliphatischen Einheiten -NH-Z-CO- und -NH-Z'-CO- mindestens 55 Gew.-% des ersten Polyamids darstellen; und
b) 99 bis 1 % eines zweiten Polyamids, gekennzeichnet durch die Ketten: 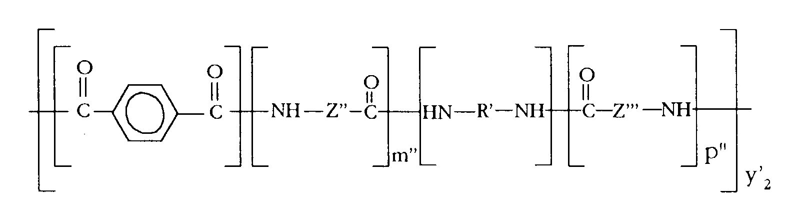 und 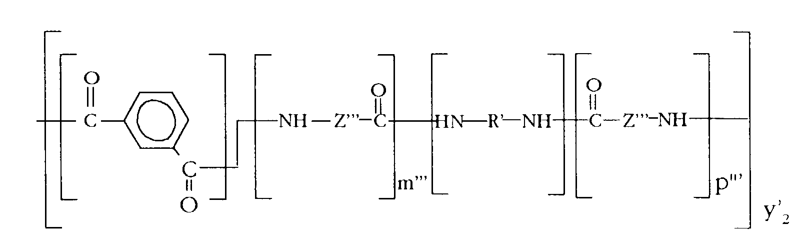 wobei:
- y'₁ und y'₂ Zahlen sind, deren Summe y'₁ + y'₂ zwischen 10 und 200 liegt;
- m", p", m"', p"' Zahlen größer oder gleich 0 sind;
- Z" und Z"' in den aliphatischen Einheiten -NH-Z"-CO- und -NH-Z"'-CO-, identisch oder verschieden, entweder ein Polymethylensegment (-CH₂-)ₙ, sind, wobei n' eine ganze Zahl größer oder gleich 6, vorzugsweise zwischen 7 und 11, oder einen Block darstellen, der eine Amidfunktion enthält, die aus der in etwa stöchiometrischen Kondensation eines oder mehrerer aliphatischer Diamine, die mindestens 4 Kohlenstoffatome zwischen den Aminfunktionen enthalten, mit einem oder mehreren aliphatischen Carbondisäuren resultiert, die mindestens 4 Kohlenstoffatome, vorzugsweise mindestens 6 Kohlenstoffatome, zwischen den Säurefunktionen enthalten;
- -HN-R'-NH- ein arylaliphatisches und/oder aliphatisches und/oder cycloaliphatisches Amin darstellt;
wobei die aromatische Disäure zu höchstens 30 Mol-% durch eine aliphatische Carbondisäure ersetzt sein kann, die mehr als 4 Kohlenstoffatome, vorzugsweise mehr als 6 Kohlenstoffatome, zwischen den Säurefunktionen enthält,
wobei die Ketten in solchen Mengen vorhanden sind, daß die aliphatischen Einheiten -NH-Z-CO- und -NH-Z'-CO- mehr als 55 Gew.-% des zweiten Polyamids darstellen.

2. Zusammensetzung nach Anspruch 1, dadurch gekennzeiclmet, daß in dem ersten Polyamid die aliphatischen Einheiten weniger als 45 Gew.-% des ersten Polyamids darstellen.

3. Zusammensetzung nach Anspruch 2, dadurch gekennzeichnet, daß in dem ersten Polyamid die aliphatischen Einheiten weniger als 40 Gew.-% des ersten Polyamids darstellen.

4. Zusammensetzung nach einem der Ansprüche 1 bis 3, dadurch gekennzeichnet, daß in dem zweiten Polyamid die aliphatischen Einheiten mehr als 60 Gew.-% des zweiten Polyamids darstellen.

5. Zusammensetzung nach Anspruch 4, dadurch gekennzeichnet, daß in dem zweiten Polyamid die aliphatischen Einheiten mehr als 70 Gew.-% des zweiten Polyamids darstellen.

6. Zusammensetzung nach einem der Ansprüche 1 bis 5, enthaltend, bezogen auf das Gewicht:
a) 5 bis 95 % des ersten Polyamids; und
b) 95 bis 5 % des zweiten Polyamids.

7. Zusammensetzung nach Anspruch 6, enthaltend, bezogen auf das Gewicht:
a) 20 bis 80 % des ersten Polyamids; und
b) 80 bis 20 % des zweiten Polyamids.

8. Zusammensetzung nach einem der Ansprüche 1 bis 7, dadurch gekennzeichnet, daß die aliphatischen Einheiten des ersten und zweiten Polyamids ausgewählt sind aus der Gruppe von Einheiten, die aus Capryllactam, Lauryllactam, 1 2-Aminododekansäure, 11-Aminoundekansäure, 10-Aminododekansäure und deren Mischungen stammen.

9. Zusammensetzung nach einem der Ansprüche 1 bis 8, dadurch gekennzeichnet, daß die aliphatische Einheit des ersten und zweiten Polyamids die Einheit 12 ist, die aus dem Lauryllactam stammt.

10. Zusammensetzung nach einem der Ansprüche 1 bis 9, dadurch gekennzeichnet, daß das Diamin des ersten und zweiten Polyamids ein cycloaliphatisches Diamin ist.

11. Zusammensetzung nach Anspruch 10, dadurch gekennzeichnet, daß das cycloaliphatische Diamin des ersten und zweiten Polyamids die folgende Formel aufweist: 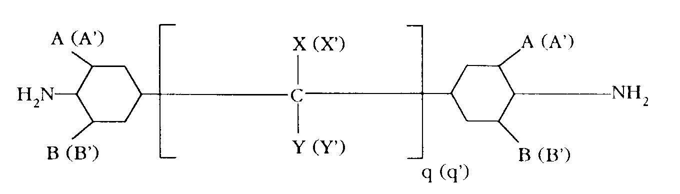 in der:
A (A') und B (B'), identisch oder verschieden, ein Wasserstoffatom oder einen Methylrest darstellen;
X (X') und Y (Y'), identisch oder verschieden, ein Wasserstoffatom oder einen Methylrest darstellen; und
q (q') eine ganze Zahl zwischen 1 und 3 ist;
wobei das cycloaliphatische Diamin gegebenenfalls in Mengen von bis zu 50 Mol-% durch Isophorondiamin ersetzt ist.

12. Zusammensetzung nach Anspruch 11, dadurch gekennzeichnet, daß das cycloaliphatische Diamin des ersten und zweiten Polyamids das Bis-(3-Methyl-4-Aminocyclohexyl)-methan oder das Bis-(4-Aminocyclohexyl)methan ist, das gegebenenfalls in Mengen von bis zu 50 Mol-% durch Isophorondiamin ersetzt ist.

13. Zusammensetzung nach einem der Ansprüche 1 bis 12, dadurch gekennzeichnet, daß in dem ersten und/oder zweiten Polyamid das y₁/y₁+y₂-Verhältnis und/oder y'₁/y'₁+y'₂-Verhältnis größer als 0,5 ist.

14. Zusammensetzung nach einem der Ansprüche 1 bis 13, dadurch gekennzeichnet, daß sie außerdem einen Füllstoff und/oder ein herkömmliches Additiv umfaßt.

15. Gegenstände, hergestellt ausgehend von einer Zusammensetzung nach einem der Ansprüche 1 bis 14.

## Claims

1. Transparent amorphous composition with high resistance to chemical agents, comprising, by weight:
a) 1 to 99 % of a first polyamide characterised by the chain sequences: 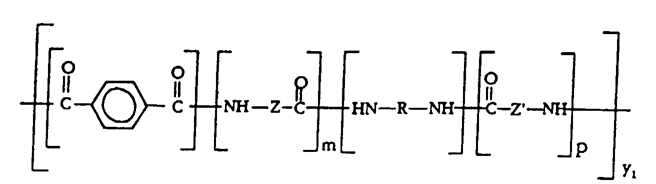 and 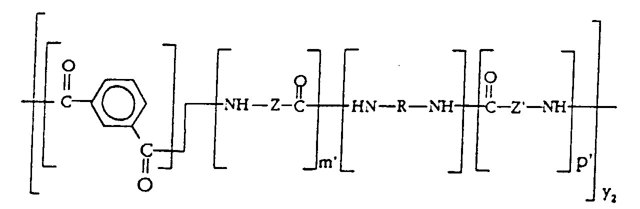 in which:
y₁ and y₂ are numbers whose sum y₁ + y₂ is between 10 and 200;
m, p, m' and p' are numbers equal to or greater than 0;
Z and Z', in aliphatic units -NH-Z-CO- and -NH-Z'-CO-, which are identical or different, are either a polymethylene segment -(CH₂)ₙ- where n is an integer equal to or greater than 6 and preferably between 7 and 11, or a sequence containing an amide functional group resulting from the substantially stoichiometric condensation of one or more aliphatic diamine(s) containing at least 4 carbon atoms between the amine functional groups and of one or more aliphatic dicarbonic acid(s) containing at least 4 and preferably at least 6 carbon atoms between the acidic functional groups;
-HN-R-NH- denotes a cycloaliphatic and/or aliphatic and/or arylaliphatic amine;
it being possible for the aromatic diacid to be replaced, in a proportion of at most 30 mol%, by an aliphatic dicarboxylic acid containing more than 4, preferably 6, carbon atoms between the acidic functional groups,
the said chain sequences being present in such proportions that the aliphatic units -NH-Z-CO- and -NH-Z'-CO- represent less than 55 % by weight of the said first polyamide; and
b) 99 to 1 % of a second polyamide characterized by the chain sequences: 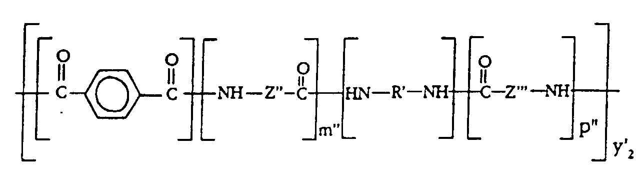 and 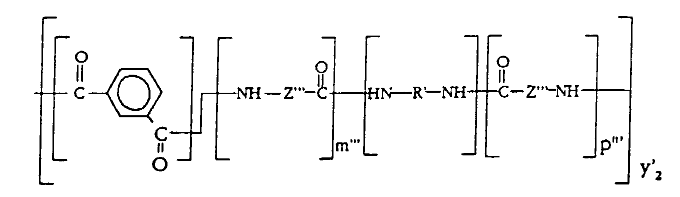 in which:
y'₁ and y'₂ are numbers whose sum y'₁ + y'₂ is between 10 and 200;
m", p", m'" and p'" are numbers equal to or greater than 0;
Z" and Z'", in the aliphatic units -NR-Z"-CO- and -MH-Z'"-CO-, which are identical or different, are either a polymethylene segment -(CH₂)ₙ- where n' is an integer equal to or greater than 6 and preferably between 7 and 11, or a sequence containing an amide functional group resulting from the substantially stoichiometric condensation of one or more aliphatic diamine(s) containing at least 4 carbon atoms between the amine functional groups and of one or more aliphatic dicarboxylic acid(s) containing at least 4 and preferably at least 6 carbon atoms between the acidic functional groups;
-HN-R'-NH- denotes a cycloaliphatic and/or aliphatic and/or arylaliphatic amine; it being possible for the aromatic diacid to be replaced, in a proportion of at most 30 mol%, by an aliphatic dicarboxylic acid containing more than 4, preferably 6, carbon atoms between the acidic functional groups,
the said chain sequences being present in such proportions that the aliphatic units -NH-Z-CO- and -NH-Z'-CO- represent more than 55 % by weight of the said second polyamide.

2. Composition according to Claim 1, characterized in that, in the said first polyamide, the aliphatic units represent less than 45 % by weight of the said first polyamide.

3. Composition according to Claim 2, characterized in that, in the said first polyamide, the aliphatic units represent less than 40 % by weight of the said first polyamide.

4. Composition according to any one of Claims 1 to 3, characterized in that, in the said second polyamide, the aliphatic units represent more than 60 % by weight of the said second polyamide.

5. Composition according to Claim 4, characterized in that, in the said second polyamide, the aliphatic units represent more than 70 % by weight of the said second polyamide.

6. Composition according to any one of Claims 1 to 5, comprising, by weight:
a) 5 to 95 % of the said first polyamide; and
b) 95 to 5 % of the said second polyamide.

7. Composition according to Claim 6, comprising, by weight:
a) 20 to 80 % of the said first polyamide; and
b) 80 to 20 % of the said second polyamide.

8. Composition according to any one of Claims 1 to 7, characterized in that the aliphatic units of the said first and second polyamides are chosen from the group consisting of the units originating from capryllactam, lauryllactam, 12-aminododecanoic acid, 11-aminoundecanoic acid, 10-aminododecanoic acid and mixtures thereof.

9. Composition according to any one of Claims 1 to 8, characterized in that the aliphatic unit of the said first and second polyamides is the unit 12 originating from lauryllactam.

10. Composition according to any one of Claims 1 to 9, characterized in that the diamine of the said first and second polyamides is a cycloaliphatic diamine.

11. Composition according to Claim 10, characterized in that the said cycloaliphatic diamine of the said first and second polyamides has the formula: 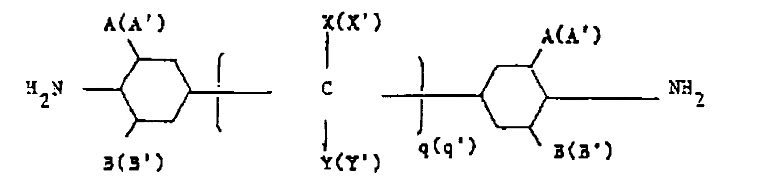 in which:
A (A') and B (B'), which are identical or different, denote the hydrogen atom or the methyl radical;
X(X') and Y (Y'), which are identical or different, denote the hydrogen atom or the methyl radical; and
q (q') is an integer between 1 and 3;
optionally replaced up to 50 mol% by isophoronediamine.

12. Composition according to Claim 11, characterized in that the cycloaliphatic diamine of the said first and second polyamides is bis(3-methyl-4-aminocyclohexyl)ethane or bis(4-aminocyclohexyl)methane, optionally replaced up to 50 mol% by isophoronediamine.

13. Composition according to any one of Claims 1 to 12, characterized in that, in the said first and/or second polyamide(s), the ratio y₁/y₁+y₂ and/or the ratio y'₁/y'₁+y'₂ is (are) greater than 0.5.

14. Composition according to any one of Claims 1 to 13, characterized in that it additionally comprises a conventional filler and/or additive.

15. Objects obtained from a composition according to any one of Claims 1 to 14.
